# EUROPÄISCHE PATENTSCHRIFT

(11) **EP 1 440 645 B1**
(45) Veröffentlichungstag und Bekanntmachung des Hinweises auf die Patenterteilung: **30.04.2008**
(21) Anmeldenummer: 03001341.1
(22) Anmeldetag: 23.01.2003
(51) Int. Cl.: A47J 31/46

(54) **Kaffeemaschine**
Coffee machine
Machine à café

(43) Veröffentlichungstag der Anmeldung: 28.07.2004
(73) Patentinhaber: WMF WÜRTTEMBERGISCHE METALLWARENFABRIK AG, 73309 Geislingen/Steige (DE)
(72) Erfinder: Geiger, Rudi, Dipl.-Ing., 73111 Lauterstein-Weissenstein (DE)
(74) Vertreter: Grünecker, Kinkeldey, Stockmair & Schwanhäusser Anwaltssozietät

(56) Entgegenhaltungen:
- EP-A- 0 862 883
- EP-A- 1 133 944

## Beschreibung

Die Erfindung bezieht sich auf eine Kaffeemaschine der im Oberbegriff von Anspruch 1 erläuterten Art.

Eine derartige Kaffeemaschine ist aus der EP 1 133 944 bekannt. Die bekannte Kaffeemaschine enthält ein Regelventil mit einem durch eine Feder beaufschlagbaren Kolben. Der Kolben verschließt und öffnet stufenlos eine einzige Durchflusspassage, in Abhängigkeit von minimalen Brühdruckänderungen, wie sie beispielsweise bei Veränderungen im Vermahlungsgrad des Kaffeemehls auftreten. Zum Übergang von einem Kaffeegetränk auf das andere Kaffeegetränk muss jedoch durch den Benutzer manuell die Vorspannung der Feder auf den Kolben verändert werden.

Eine derartige Kaffeemaschine ist aus der EP 862 883 A bekannt. Die bekannten Kaffeemaschine gehört zu denjenigen Kaffeemaschinen, die in der Lage sind, wenigstens zwei verschiedene Sorten Kaffeegetränk herzustellen und auszugeben; insbesondere sind dies Kaffeegetränke vom Filterkaffeetyp und Kaffeegetränke vom Espressotyp. Die beiden Kaffeegetränke unterscheiden sich neben der vorzugsweisen Verwendung verschiedener Sorten von Kaffeebohnen, durch einen unterschiedlichen Brühdruck, wobei die Kaffeegetränke vom Filterkaffeetyp unter Atmosphärendruck bis leichtem Überdruck bis zu 1,5 bar zubereitet werden, während die Kaffeegetränke vom Espressotyp einen höheren Druck, d.h. über bzw. deutlich über 1,5 bar bis etwa 7,5 bar, erfordern. Getränke vom Espressotyp werden vom Verbraucher nur dann akzeptiert, wenn sie eine gut ausgeprägte, feinporige und standfeste Schaumschicht, die sogenannte "Crema" aufweisen. Zu diesem Zweck wird bei der bekannten Kaffeemaschine dieses unter erhöhtem Druck gebrühte Kaffeegetränk durch einen Strömungsweg mit einer Querschnittsreduzierung geschickt. Andererseits wird es vom Verbraucher aus als angenehm empfunden, wenn beide Kaffeegetränkesorten durch die gleiche Zapföffnung auslaufen, so dass der Benutzer nicht versehentlich die Tasse oder die Kanne unter den falschen Auslauf stellen kann. Bei der bekannten Kaffeemaschine wird dieses Problem dadurch gelöst, dass in die Auslaufleitung zwischen der Brüheinrichtung und der Zapföffnung eine Vorrichtung zwischengeschaltet wird, die beim Brühen von Kaffeegetränk des Espressotyps den Auslaufquerschnitt verringert und ihn beim Brühen von Kaffeegetränk vom Filterkaffeetyp wieder in seiner vollen Querschnittsfläche freigibt. Diese Vorrichtung wird bei der bekannten Kaffeemaschine durch einen Motor angetrieben, der zusätzlichen Steuerungsaufwand erfordert.

Der Erfindung liegt die Aufgabe zugrunde, eine Kaffeemaschine der genannten Art so weiter zu bilden, dass auf konstruktiv einfache Weise der Steuerungsaufwand verringert wird.

Die Aufgabe wird durch die im Anspruch 1 angegebenen Merkmale gelöst.

Bei der erfindungsgemäßen Ausgestaltung der Kaffeemaschine wird die Tatsache ausgenutzt, dass die unterschiedlichen Kaffeegetränkearten mit unterschiedlichen Brühdrücken zubereitet werden und es wird sichergestellt, dass diese unterschiedlichen Brühdrücke auch die erfindungsgemäße Drosseleinrichtung beaufschlagen. Dadurch wird es möglich, dass die Drosseleinrichtung durch den Brühdruck selbst betätigt wird, so dass kein zusätzlicher Motor vorgesehen werden muss.

Vorteilhafte Weiterbildungen der Erfindung sind den Unteransprüchen zu entnehmen.

Ausführungsbeispiele der Erfindung werden nachfolgend anhand der Zeichnungen näher erläutert. Es zeigen:
- Fig. 1: eine schematische Darstellung der für die Erfindung wesentlichen Bestandteile einer Kaffeemaschine,
- Fig. 2: eine schematische Darstellung einer ersten Drosselvorrichtung im Schnitt,
- Fig. 3: die Drosselvorrichtung nach Fig. 2 in einer zweiten Stellung,
- Fig. 4: ein weiteres Ausführungsbeispiel einer Drosselvorrichtung im Schnitt,
- Fig. 5: eine herausvergrößerte Einzelheit aus Fig. 4.

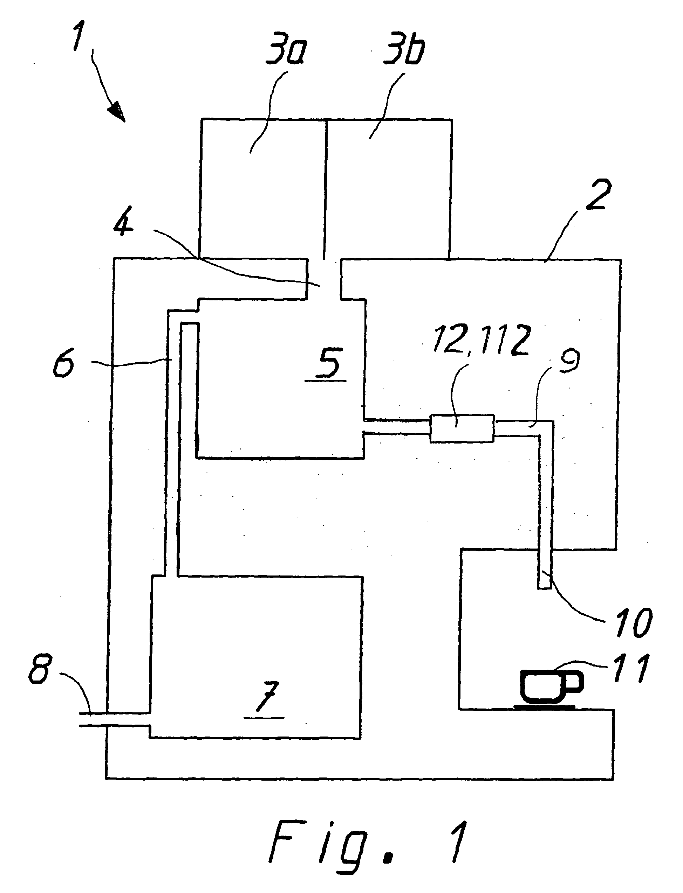

In Fig. 1 ist in schematischer Darstellung eine Kaffeemaschine 1 ersichtlich, die in der Lage ist, wenigstens zwei unterschiedliche Kaffeegetränkearten zuzubereiten, die bei sich deutlich voneinander unterscheidenden Brühdrücken hergestellt werden. Beispielsweise kann ein erstes Kaffeegetränk unter Atmosphärendruck bzw. leichtem Überdruck von bis zu 1,5 bar hergestellt werden, was ein Kaffeegetränk vom Filterkaffeetyp ergibt. Ein zweites Kaffeegetränk, insbesondere ein Kaffeegetränk vom Espressotyp, wird unter einem erhöhten Druck von über 1,5 bar bis zu 7,5 bar hergestellt.

Die Kaffeemaschine 1 weist ein Gehäuse 2 auf, auf dem bevorzugt zwei Vorratsbehälter 3a und 3b vorgesehen sind, die die unterschiedlichen Kaffeebohnen für die verschiedenen Kaffeegetränkearten bevorraten. Die Vorratsbehälter 3a, 3b stehen über einen Füllschacht 4, der gegebenenfalls mit einer nicht dargestellten Dosiervorrichtung versehen ist, mit einer Brüheinrichtung 5 in Verbindung. Die Brüheinrichtung 5 kann von derjenigen Art sein, die in der Lage ist, zwei oder noch mehr Kaffeegetränkearten zuzubereiten. Es kann jedoch auch für jede Kaffeegetränkeart eine eigene Brüheinrichtung vorgesehen werden.

Die Brüheinrichtung 5 wird über eine Wasserleitung 6 mit Wasser versorgt, die entweder mit einem Boiler und Wasservorratstank oder, wie dargestellt, über einen Heißwasserbereiter 7 (Boiler oder Durchlauferhitzer) und einen Zulauf 8 mit dem Wasserleistungsnetz verbunden ist.

Die Brüheinrichtung 5 mündet über eine für die beiden Kaffeegetränkearten gemeinsame Auslaufleitung 9 in eine gemeinsame Zapföffnung 10, unter die ein Gefäß, dargestellt ist eine Tasse 11, gestellt werden kann. Es sind weiterhin nicht gezeichnete Wahltasten oder -schalter und eine Steuerungseinrichtung vorgesehen, über die der Benutzer das gewünschte Kaffeegetränk in der gewünschten Menge vorwählen kann.

In der Auslaufleitung 9 ist eine Drosseleinrichtung 12, 112 derart vorgesehen, dass sie von den unterschiedlichen Brühdrücken aus der Brüheinrichtung 5 beaufschlagt wird.

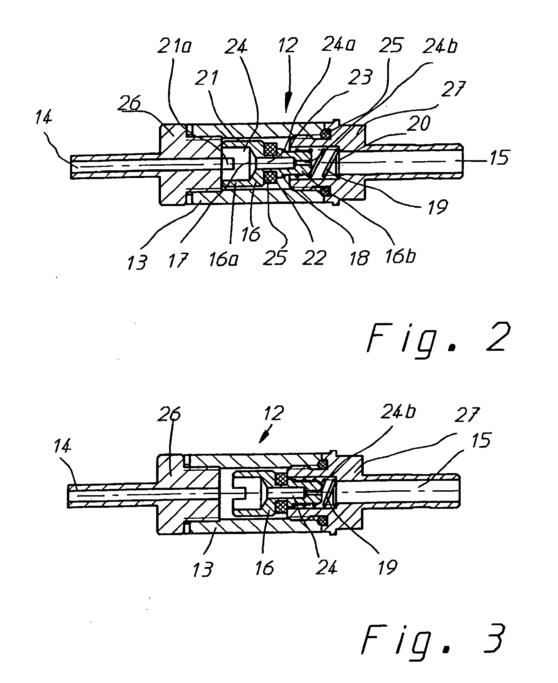

Anhand der Fig. 2 und 3 wird ein erstes Ausführungsbeispiel einer derartigen Drosselvorrichtung 12 beschrieben.

Die Drosselvorrichtung 12 weist ein im Wesentlichen zylindrisches Gehäuse 13 mit einem Einlassteil 26 und einem Düsenteil 27 auf, das in Axialrichtung durchflossen wird. Zu diesem Zweck ist ein Einlass 14 im Einlassteil 26 an einer Stirnseite des Gehäuses 13 und ein Auslass 15 im Düsenteil 27 an der gegenüberliegenden, der Zapföffnung 10 zugewandten Stirnseite des Gehäuses 13 vorgesehen.

Im Inneren des Gehäuses 13 ist ein Kolben 16 axial verschiebbar gelagert, der an seiner dem Einlass 14 zugewandten Seite ein erstes Kolbenteil 16a und an seiner dem Auslass 15 zugewandten Seite ein zweites Kolbenteil 16b aufweist. Das erste Kolbenteil 16a ist im Wesentlichen napfförmig ausgebildet und weist mit seiner Öffnung zum Einlass 14. Die dem Einlass 14 zugewandte Fläche 17 bildet eine Kolbenfläche zum Betätigen des Kolbens 16. Das zweite Kolbenteil 16b ist im Wesentlichen zylindrisch ausgebildet und enthält einen Flansch 18, an dem sich eine Feder 19 abstützt. Die Feder 19 stützt sich an ihrer anderen Seite an einem Widerlager 20 am Düsenteil 27 ab, das in der Nähe der Auslauföffnung 15 vorgesehen ist. Die Feder 19 ist als Bewegungseinrichtung ausgelegt, die den Kolben 16 in Richtung auf den Einlass 14 drückt. Zu diesem Zweck ist die Feder 19 als Schraubendruckfeder ausgebildet.

Das napfförmige Kolbenteil 16a hat zumindest bereichsweise einen Außendurchmesser, der kleiner als der Innendurchmesser des Gehäuses 13 ist. Bevorzugt sind am Außenumfang des napfförmigen Kolbenteils 16a Axialrillen oder dgl. vorgesehen, durch die ein Strömungsweg 21 entlang des Außenumfanges des napfförmigen Kolbenteils 16a geschaffen wird, der über Öffnungen 21a im Kolbenteil 16a mit dem Einlass 14 verbunden ist.

Der Außendurchmesser des zylindrischen Kolbenteils 16b ist kleiner als der Außendurchmesser des napfförmigen Kolbenteils 16a, so dass auf der dem Auslass 15 zugewandten Stirnfläche des napfförmigen Kolbenteils 16a am Übergang zum zylindrischen Kolbenteil 16b eine Dichtfläche 22 ausgebildet wird. Die Dichtfläche 22 wirkt mit einem Dichtsitz 23 zusammen, der am Düsenteil 27 rund um den Auslass 15 vorgesehen ist. Der Dichtsitz 23 ist in Axialrichtung so im Gehäuse untergebracht, dass der zylindrische Teil 16b des Kolbens 16 sich in jeder Kolbenstellung mit radialem Abstand innerhalb des Dichtsitzes 23 befindet.

Durch beide Kolbenteile 16a, 16b erstreckt sich eine in Strömungsrichtung weisende, axiale Passage 24 in Form einer Durchgangsbohrung, die einen Bereich 24a mit größerem Innendurchmesser und einen Bereich 24b mit kleinerem Innendurchmesser aufweist. Der Bereich 24b mit kleinem Innendurchmesser mündet an der dem Auslass 15 zugewandten Seite aus dem zylindrischen Kolbenteil 16b und ist als Düse ausgebildet. Der Bereich 24a mit größerem Durchmesser mündet aus der Kolbenfläche 17 und begrenzt diese nach innen. Mit dem Bezugszeichen 25 sind Dichtringe bezeichnet.

In der in Fig. 2 dargestellten Stellung wird der Kolben 16 durch die als Bewegungseinrichtung für den Kolben 16 wirkende Feder 19 gegen einen Anschlag am Einlassteil 26 gedrückt. In dieser Stellung kann Strömungsmittel, d.h. das entsprechende Kaffeegetränk, über die Öffnungen 21a im napfförmigen Kolbenteil 16a in den Strömungsweg 21 gelangen und von dort, am Dichtsitz 23 vorbei, in den Abstand strömen, der zwischen dem zylindrischen Kolbenteil 16b und dem Dichtsitz 23 vorgesehen ist, und in dem die Feder 19 untergebracht ist, und gelangt dann in den Auslass 15. In gleicher Weise kann Strömungsmittel durch die permanent offene Passage 24 in den Auslass 15 gelangen, wobei der Auslassquerschnitt in diesem Falle durch die offene Querschnittsfläche im Bereich des Dichtsitzes 23, d.h. den ringförmigen Raum um das zylindrische Kolbenteil 16b und die Querschnittsfläche des düsenartigen Bereichs 24b der Passage 24, definiert wird. In dieser Stellung bleibt der Kolben 16 stehen, solange die Federkraft der Feder 19 nicht überwunden wird. Die Federkraft der Feder 19 ist bevorzugt so ausgebildet, dass der Kolben 16 in seiner Anlage am Widerlager 26 verbleibt, solange an der Drosseleinrichtung 12 und dem Kolben 16 derjenige Druck anliegt, der beim Brühen von Kaffeegetränk unter niedrigerem Brühdruck, d.h. Kaffeegetränk vom Filterkaffeetyp, die Drosseleinrichtung 12 erreicht. Dieser Druck liegt bevorzugt zwischen Atmosphärendruck und 1,5 bar.

Erhöht sich beim Brühen der zweiten Sorte Kaffeegetränk der die Drosseleinrichtung 12 erreichende Druck bis zur Überwindung der Federkraft der Feder 19, so wird der Kolben 16 in die in Fig. 3 dargestellte Stellung in Richtung auf den Auslass 15 gedrückt, bis die Dichtfläche 22 des napfförmigen Kolbenteils 16a am Dichtsitz 23 des Düsenteils 27 anliegt. Dadurch wird der Strömungsweg 21 versperrt, so dass das Strömungsmittel, d.h. das Kaffeegetränk vom Espressotyp, nur durch die Passage 24 strömen kann. Dabei bildet allein der düsenartig verengte Bereich 24b der Passage 24 den verringerten Auslassquerschnitt. Mit dieser Ausgestaltung wird somit eine Querschnittsverringerung des Auslassquerschnittes erreicht, die in Verbindung mit dem erhöhten Brühdruck im Bereich über 1,5 bar bis 7,5 bar zum Erzeugen einer feinporigen, standfesten "Crema" beiträgt.

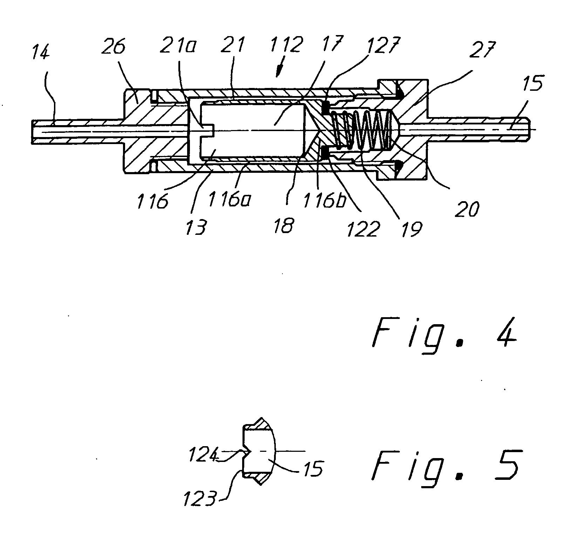

In den Fig. 4 und 5 ist ein weiteres Ausführungsbeispiel einer erfindungsgemäßen Drosselvorrichtung 112 gezeigt, wobei gleiche bzw. vergleichbare Bauteile mit den gleichen Bezugszeichen gekennzeichnet und nicht nochmals erläutert sind.

Die Drosselvorrichtung 112 enthält einen Kolben 116, der wiederum ein napfförmiges Kolbenteil 116a und ein zylindrisches Kolbenteil 116b aufweist, das einen geringeren Außendurchmesser als das napfförmige Kolbenteil 1 16a aufweist. Die Feder 19 ist mit der gleichen Federkraft ausgestattet und stützt sich wieder an einem Widerlager 20 am Düsenteil 27 und einem Flansch 18 am Übergang zwischen den beiden Kolbenteilen 116b und 116a ab.

Der Kolben 116 ist am Übergang zum napfförmigen Kolbenteil 116a und an einer dem Auslass 15 zugewandten Seite, mit einem ringförmigen Dichtkörper 127 versehen, der eine ebene Dichtfläche 122 aufweist, die sich senkrecht zur Achse des Kolbens 116 erstreckt.

Am Düsenteil 27 rund um den Auslass 15 ist ein in Fig. 5 vergrößert dargestellter Dichtsitz 123 ausgebildet, der durch kerbenartige Öffnungen 124 durchbrochen ist. Wird der Kolben 116, wie in Fig. 4 dargestellt, durch den höheren Brühdruck mit seiner Dichtfläche 122 auf den Dichtsitz 123 gedrückt, so bilden die kerbenartigen Durchtrittsöffnungen 124 eine permanent offene Passage und definieren den kleineren Durchflussquerschnitt.

Fällt der am Kolben 116 anliegende Druck durch Reduzierung des Brühdruckes unter den durch die Federkraft der Feder 19 vorgegebenen Wert, so bewegt die Feder 19 den Kolben 116 bis zum Anschlag an das Einlassteil 26. In dieser Stellung kann das Kaffeegetränk durch die Öffnungen 21a und den Strömungsweg 21 in den Auslass 15 strömen, wobei hier der Querschnitt des Auslasses 15 im Bereich des Dichtsitzes 123 den größeren Durchflussquerschnitt definiert.

In Abwandlung der beschriebenen und gezeichneten Ausführungsbeispiele kann die Betätigungs- und Bewegungsrichtung der Drosseleinrichtung kinematisch umgekehrt werden. Statt der Feder kann eine andere Bewegungseinrichtung für den Kolben vorgesehen werden, beispielsweise ebenfalls ein Brühdruck. Die beiden Durchflussquerschnitte können weiterhin streng getrennt voneinander vorgesehen werden, wobei der kleinere Durchflussquerschnitt nicht Teil des größeren Durchflussquerschnittes ist. Auch der Kolben kann statt eine napfförmige Ausbildung, was gewichtsvermindernd wirkt, als Massivkörper hergestellt werden.

## Patentansprüche

1. Kaffeemaschine (1) zum Zubereiten von wenigstens einem ersten und einem zweiten Kaffeegetränk, mit einer Brüheinrichtung (5), die über eine Auslaufleitung (9) mit einer Zapföffnung (10) verbunden ist, und mit einer in der Auslaufleitung (9) vorgesehenen Drosseleinrichtung (12, 112) mit einem Einlass (14), einem Auslass (15) und mit einem Kolben (16, 116), der zwischen einem ersten und einem zweiten Durchflussquerschnitt verstellbar ist, wobei der erste Durchflussquerschnitt größer als der zweite Durchflussquerschnitt ist, wobei der Kolben (16, 116) eine zum Bewegen des Kolbens (16, 116) in einer Richtung druckbeaufschlagbare Kolbenfläche (17) und eine Bewegungseinrichtung (19) zum Bewegen des Kolbens (16, 116) in Gegenrichtung aufweist, **dadurch gekennzeichnet, dass** zum Zubereiten von wenigstens einem ersten Kaffeegetränk mit einem ersten Brühdruck und wenigsten einem zweiten Kaffeegetränk mit einem zweiten Brühdruck, wobei der zweite Brühdruck höher als der erste Brühdruck ist, der Kolben (16,116) der Drosseleinrichtung (12, 112) bei einem Wechsel des Brühdrucks durch den die Drosseleinrichtung (12, 112) erreichenden Brühdruck selbsttätig verstellbar ist, dem Kolben (16, 116) eine den kleineren Durchtrittquerschnitt definierende, permanent offene Passage (24, 124) zugeordnet ist, über die die Verbindung zwischen Einlass (14) und Auslass (15) permanent offen ist, der größere Durchflussquerschnitt durch die Passage (24, 124) und einen Dichtsitz (23, 123) definiert ist und der Kolben (16, 116) eine den Dichtsitz (23, 123) verschließende Dichtfläche (22, 122) und einen Strömungsweg (21) entlang seines Außenumfangs aufweist.

2. Kaffeemaschine nach Anspruch 1, **dadurch gekennzeichnet, dass** die Drosseleinrichtung (12, 112) durch den höheren Brühdruck verstellbar ist.

3. Kaffeemaschine nach Anspruch 1 oder 2, **dadurch gekennzeichnet, dass** die Bewegungseinrichtung eine Feder (19) enthält, deren Federkraft größer als der an der Drosseleinrichtung (12, 112) anliegende niedrigere Brühdruck aber kleiner als der höhere Brühdruck ist.

4. Kaffeemaschine nach einem der Ansprüche 1 bis 3, **dadurch gekennzeichnet, dass** die Strömungsverbindung zum größeren Durchflussquerschnitt durch die Passage (24) und den die Passage (24) umgehenden, verschließbaren Strömungsweg (21)führt.

5. Kaffeemaschine nach einem der Ansprüche 1 bis 4, **dadurch gekennzeichnet, dass** die Drosseleinrichtung (12, 112) ein Gehäuse (13) mit dem Einlass (14) und dem Auslass (15) enthält, in dem der Kolben (16, 116) mit einer dem Einlass (14) zugewandten Kolbenfläche (17) und einer dem Auslass (15) zugewandten und mit der den größeren Durchflussquerschnitt definierenden Dichtsitz (23, 123) in Eingriff bringbaren Dichtfläche (22, 122) bewegbar ist, wobei der zwischen dem Einlass (14) und dem Dichtsitz (23, 123) angeordnete Strömungsweg (21) zwischen der Außenfläche des Kolbens (16, 116) und der Innenfläche des Gehäuses (13) vorgesehen ist.

6. Kaffeemaschine nach einem der Ansprüche 1 bis 5, **dadurch gekennzeichnet, dass** die Passage (24) eine sich durch den Kolben (16) erstreckende Durchgangsbohrung ist.

7. Kaffeemaschine nach einem der Ansprüche 1 bis 5, **dadurch gekennzeichnet, dass** die Passage (124) durch wenigstens eine Durchtrittsöffnung zwischen der am Kolben (116) vorgesehenen Dichtfläche (122) und dem zugeordneten Dichtsitz (123) gebildet ist.

8. Kaffeemaschine nach Anspruch 7, **dadurch gekennzeichnet, dass** die Strömungsverbindung zum kleineren Durchflussquerschnitt durch den Strömungsweg (21) führt.

## Claims

1. A coffee machine (1) for preparing at least a first coffee beverage and a second coffee beverage, comprising a brewing means (5) which is connected via an outlet line (9) to a tap opening (10), and comprising a throttle means (12,112) provided in the outlet line (9) and having an inlet (14), an outlet (15) and a piston (16, 116) which is adjustable between a first and a second flow cross-section, the first flow cross-section being greater than the second flow cross-section, the piston (16, 116) having a piston surface (17) which is pressure-actuable for moving the piston (16, 116) in one direction, and having a motion means (19) for moving the piston (16, 116) in opposite direction, **characterized in that** that for preparing at least a first coffee beverage at a first brewing pressure and at least a second coffee beverage at a second brewing pressure, the second brewing pressure being higher than the first brewing pressure, the piston (16, 116) of the throttle means (12, 112) is automatically adjustable upon change of the brewing pressure by the brewing pressure reaching the throttle means (12, 112), the piston (16, 116) has assigned thereto a permanently open passage (24, 124) defining the smaller passage cross-section, via which the connection between inlet (14) and outlet (15) is permanently open, the larger flow cross-section is defined by the passage (24, 124) and a sealing seat (23, 123) and the piston (16, 116) has a sealing surface (22, 122) closing the sealing seat (23, 123) and a flow path (21) along its outer circumference.

2. The coffee machine according to claim 1, **characterized in that** the throttle means (12, 112) is adjustable by the higher brewing pressure.

3. The coffee machine according to claim 1 or 2, **characterized in that** the motion means includes a spring (19) having a force greater than the lower brewing pressure exerted on the throttle means (12, 112), but smaller than the higher brewing pressure.

4. The coffee machine according to any one of claims 1 to 3, **characterized in that** the flow connection to the larger flow cross-section leads through the passage (24) and the closable flow path (21) surrounding the passage (24).

5. The coffee machine according to any one of claims 1 to 4, **characterized in that** the throttle means (12, 112) includes a housing (13) having the inlet (14) and the outlet (15) in which the piston (16, 116) is movable with a piston surface (17) facing the inlet (14) and with a sealing surface (22, 122) which faces the outlet (15) and is engageable with a sealing seat (23 123) defining the larger flow cross-section, the flow path (21) arranged between the inlet (14) and the sealing seat (23, 123) being provided between the outer surface of the piston (16, 116) and the inner surface of the housing (13).

6. The coffee machine according to any one of claims 1 to 5, **characterized in that** the passage (24) is a through-hole extending through the piston (16).

7. The coffee machine according to any one of claims 1 to 5, **characterized in that** the passage (124) is formed by at least one passage opening between the sealing surface (122) provided on the piston (116) and the associated sealing seat (123).

8. The coffee machine according to claim 7, **characterized in that** the flow connection to the smaller flow cross-section leads through the flow path (21).

## Revendications

1. Machine à café (1) pour la préparation d'au moins un premier et un deuxième type de café, comportant un dispositif d'infusion (5), qui est relié à un orifice de soutirage (10) via une conduite d'évacuation (9), et comportant un dispositif de régulation (12, 112), prévu dans la conduite d'évacuation (9) et muni d'une admission (14), d'une sortie (15) et d'un piston (16, 116), qui peut être réglé entre une première et une deuxième section de passage, la première section de passage étant supérieure à la deuxième section de passage, le piston (16, 116) comportant une surface de piston (17), apte à être sollicitée en pression pour le déplacement du piston (16, 116) dans une direction, et un dispositif de déplacement (19) pour déplacer le piston (16, 116) dans la direction opposée, **caractérisée en ce que**, pour la préparation d'au moins un premier type de café avec une première pression d'infusion et d'au moins un deuxième type de café avec une deuxième pression d'infusion, la deuxième pression d'infusion étant supérieure à la première pression d'infusion, le piston (16, 116) du dispositif de régulation (12, 112) peut être déplacé automatiquement par la pression d'infusion atteignant le dispositif de régulation (12, 112) lors d'un changement de pression d'infusion, un passage (24, 124), qui est ouvert en permanence et définit la plus petite section de passage et par l'intermédiaire duquel la liaison entre l'admission (14) et la sortie (15) reste ouverte en permanence, est associé au piston (16, 116), la plus grande section de passage est définie à travers le passage (24, 124) et un logement étanche (23, 123), et le piston (16, 116) comporte une surface d'étanchéité (22, 122) obturant le logement étanche (23, 123) et un trajet d'écoulement (21) le long de sa périphérie extérieure.

2. Machine à café selon la revendication 1, **caractérisée en ce que** le dispositif de régulation (12, 112) peut être réglé par la plus grande pression d'infusion.

3. Machine à café selon la revendication 1 ou 2, **caractérisée en ce que** le dispositif de déplacement comporte un ressort (19) dont la force de ressort est supérieure à la plus faible pression d'infusion, appliquée sur le dispositif de régulation (12, 112), mais est inférieure à la plus forte pression d'infusion.

4. Machine à café selon l'une quelconque des revendications 1 à 3, **caractérisée en ce que** la liaison d'écoulement vers la plus grande section de passage passe à travers le passage (24) et le trajet d'écoulement (21), qui peut être fermé et contourne le passage (24).

5. Machine à café selon l'une quelconque des revendications 1 à 4, **caractérisée en ce que** le dispositif de régulation (12, 112) comporte un boîtier (13) avec l'admission (14) et la sortie (15), dans lequel peut se déplacer le piston (16, 116), muni d'une surface de piston (17) orientée vers l'admission (14) et d'une surface d'étanchéité (22, 122) orientée vers la sortie (15) et pouvant être amenée en prise avec le logement étanche (23, 123) définissant la plus grande section de passage, sachant que le trajet d'écoulement (21), agencé entre l'admission (14) et la sortie (15), est prévu entre la face extérieure du piston (16, 116) et la face intérieure du boîtier (13).

6. Machine à café selon l'une quelconque des revendications 1 à 5, **caractérisée en ce que** le passage (24) est un trou débouchant qui passe à travers le piston (16).

7. Machine à café selon l'une quelconque des revendications 1 à 5, **caractérisée en ce que** le passage (124) est formé par au moins un orifice de passage entre la surface d'étanchéité (122), prévue sur le piston (116), et le logement étanche (123) associé.

8. Machine à café selon la revendication 7, **caractérisée en ce que** la liaison d'écoulement vers la plus petite section de passage mène à travers le trajet d'écoulement (21).
